# EUROPEAN PATENT SPECIFICATION

(11) **EP 4 576 707 B1**
(45) Date of publication and mention of the grant of the patent: **02.09.2026**
(21) Application number: 25175815.7
(22) Date of filing: 08.06.2020
(51) Int. Cl.: G06Q 10/0631, G06N 20/10, G06Q 10/0635, G06Q 10/067, G06Q 10/06, G06F 16/35, G06Q 10/0639, H04L 41/16, G06N 5/025, H04L 41/5054

(54) **DYNAMIC GENERATION ON ENTERPRISE ARCHITECTURES USING CAPACITY-BASED PROVISIONS**
DYNAMISCHE ERZEUGUNG AUF UNTERNEHMENSARCHITEKTUREN UNTER VERWENDUNG KAPAZITÄTSBASIERTER MASSNAHMEN
GÉNÉRATION DYNAMIQUE SUR DES ARCHITECTURES D'ENTREPRISE UTILISANT DES PROVISIONS BASÉES SUR LA CAPACITÉ

(30) Priority: 06.06.2019 US 201962858303 P
(43) Date of publication of application: 25.06.2025
(62) Document number(s) of the earlier application(s) in accordance with Art. 76 EPC: 20819530.5 / 3 980 947
(73) Proprietor: EXTREME NETWORKS, INC., San Jose, CA 95119 (US)
(72) Inventor: AMROD, Alan Cuellar, Jupiter, 33458 (US); PULLELA, Shyamsundar, Milpitas, 95035 (US); VUCAJNK, Gregor, Milpitas, 95035 (US)
(74) Representative: Cross, James Peter Archibald

(56) References cited:
- WO-A1-2018/119568
- US-A1- 2014 337 429
- US-A1- 2018 302 296
- US-A1- 2019 044 825

## Description

The following application is incorporated herein by reference in its entirety: US provisional application 62/858,303, filed June 6, 2019, and entitled "Capacity-Based Service Provisioning."

### BACKGROUND

Enterprise networking refers to the physical, virtual, and/or logical design of a network, and how the various software, hardware, and protocols work together to transmit data. Enterprise networks may include, for example, routers, switches, access points, and different stations. Design protocols for designing enterprise architectures can utilize a blueprint for the enterprise network that is based on the type of enterprise network. These blueprints are static in nature, and therefore may be outdated as improvements in architecture designs or advancements in technology are developed.

US 2019/044825 A1 discloses a method and system for determining an preventing outages in an IT network by predicting status, utilization, performance, or a combination thereof for IT resources.

US 2014/337429 A1 discloses cloud-aware industrial devices that feed robust sets of data to a cloud-based data analyzer that executes as a service in a cloud platform.

WO 2018/119568 A1 discloses systems and methods for forecasting network resource and/or infrastructure needs for an enterprise computer system that employs network servers to host resources that are requested by network users.

US 2018/302296 A1 discloses a method and apparatus for network service scheduling.

### BRIEF DESCRIPTION OF THE DRAWINGS

The accompanying drawings are incorporated herein and form a part of the specification.
FIG. 1 depicts a diagram of an example of a capacity-based service provisioning system, according to aspects of the present disclosure.
FIG. 2 depicts an example enterprise network, according to aspects of the present disclosure.
FIG. 3 depicts an example machine learning model, according to aspects of the present disclosure.
FIG. 4 depicts a flowchart of an example of a method for capacity-based service provisioning, according to aspects of the present disclosure.
FIG. 5 depicts a diagram of an example of an enterprise network resource analysis engine, according to aspects of the present disclosure.
FIG. 6 depicts a flowchart of a method for enterprise network resource analysis, according to aspects of the present disclosure.
FIG. 7 depicts a diagram of an enterprise network comparison engine, according to aspects of the present disclosure.
FIG. 8 depicts a flowchart of a method for enterprise network comparison, according to aspects of the present disclosure.
FIG. 9 depicts a diagram of an enterprise network needs prediction engine, according to aspects of the present disclosure.
FIG. 10 depicts a flowchart of a method for network needs prediction, according to aspects of the present disclosure.
FIG. 11 depicts a flowchart of a method for generating enterprise architectures, according to aspects of the present disclosure.
FIG. 12 is an example computer system useful for implementing various embodiments, according to aspects of the present disclosure.

In the drawings, like reference numbers generally indicate identical or similar elements. Additionally, generally, the left-most digit(s) of a reference number identifies the drawing in which the reference number first appears.

### DETAILED DESCRIPTION

The invention is defined by the appended claims. Claim 1 defines a method, claim 8 defines a device and claim 15 defines a non-transitory, tangible computer-readable medium. In the following, any method and/or apparatus referred to as embodiments but nevertheless do not fall within the scope of the appended claims are to be understood as examples helpful in understanding the invention.

It is to be appreciated that the Detailed Description section, and not the Abstract sections, is intended to be used to interpret the claims. The Summary and Abstract sections may set forth one or more but not all example embodiments as contemplated by the inventor(s), and thus, are not intended to limit the appended claims in any way.

The engines described herein may be implemented as cloud-based engines. For example, a cloud-based engine may be an engine that can run applications and/or functionalities using a cloud-based computing system. All or portions of the applications and/or functionalities may be distributed across multiple computing devices, and need not be restricted to only one computing device. In some embodiments, the cloud-based engines can execute functionalities and/or modules that end users access through a web browser or container application without having the functionalities and/or modules installed locally on the end-users' computing devices.

In some embodiments, datastores may include repositories having any applicable organization of data, including tables, comma-separated values (CSV) files, databases (e.g., SQL), or other applicable known organizational formats. Datastores may be implemented, for example, as software embodied in a physical computer-readable medium on a general- or specific-purpose machine, in firmware, in hardware, in a combination thereof, or in an applicable known device or system. Datastore-associated components, such as database interfaces, may be considered part of a datastore, part of some other system component, or a combination thereof.

Datastores can include data structures. In some embodiments, a data structure may be associated with a particular way of storing and organizing data in a computer so that it may be used efficiently within a given context. Data structures may be based on the ability of a computer to fetch and store data at any place in its memory. Thus, some data structures may be based on computing the addresses of data items with arithmetic operations; while other data structures may be based on storing addresses of data items within the structure itself. Many data structures use both principles. The implementation of a data structure can entail writing a set of procedures that create and manipulate instances of that structure. The datastores described herein may be cloud-based datastores that is compatible with cloud-based computing systems and engines.

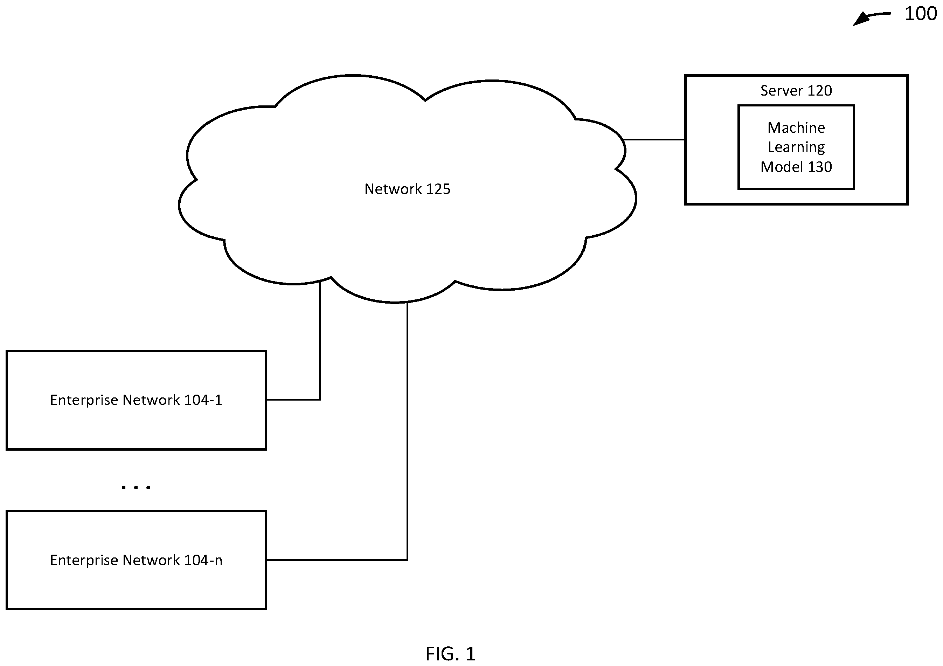

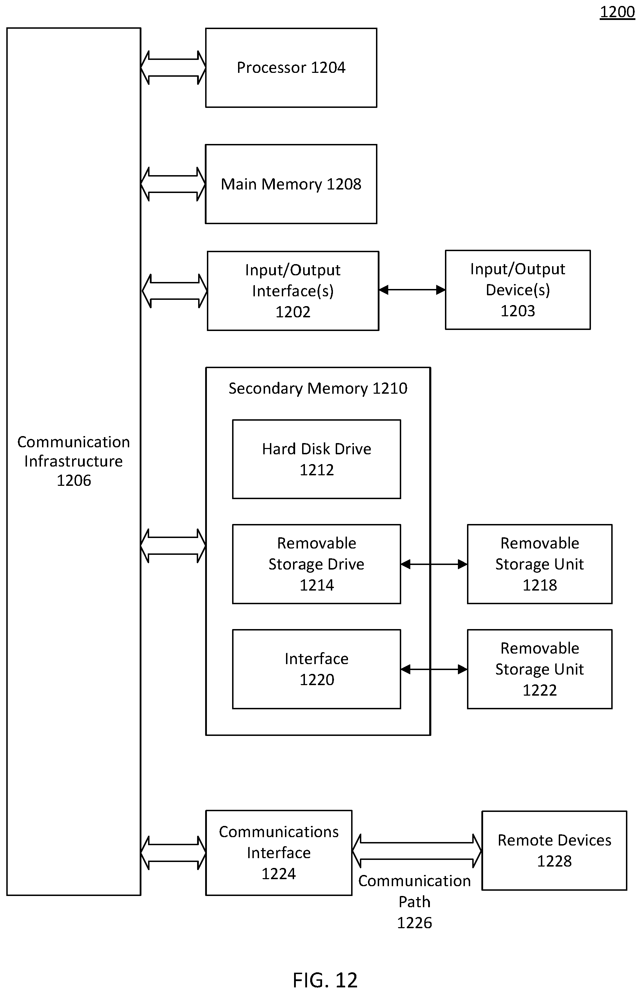

FIG. 1 depicts a diagram 100 of an example of a capacity-based service provisioning system. The diagram 100 includes enterprise networks 104-1 to 104-n (collectively referred to as a plurality of enterprise networks 104), a server 120, and a network 125. Devices of environment 100 may include a computer system 1200 shown in FIG. 12, discussed in greater detail below. The number and arrangement of devices and networks shown in FIG. 1 are provided as an example. For example, the plurality of enterprise networks 104 may include thousands enterprise networks, such that the processes described herein are computationally complex and cannot be reasonably performed by a human at scale. That is, analyzing the enterprise architectures of thousands of enterprise networks on a continuous basis and providing updated recommendations for other enterprise networks as information learned from such analysis evolves cannot be practically be performed by the human mind. In practice, there may be additional devices and/or networks, fewer devices and/or networks, different devices and/or networks, or differently arranged devices and/or networks than those shown in FIG. 1. Furthermore, two or more devices shown in Fig. 1 may be implemented within a single device, or a single device shown in FIG. 1 may be implemented as multiple, distributed devices. Additionally, or alternatively, a set of devices (e.g., one or more devices) of the environment 100 may perform one or more functions described as being performed by another set of devices of the environment 100.

The server 120 may include a server device (e.g., a host server, a web server, an application server, etc.), a data center device, or a similar device, capable of communicating with the plurality of enterprise networks 104 via the network 125. The server 120 may include a machine learning model 130.

In some embodiments, the machine learning model 130 may be trained using supervised machine learning algorithms, unsupervised machine learning algorithms, or a combination of both, to categorize each of the plurality of enterprise networks 104. For example, the machine learning model 130 may be trained using a density-based clustering technique such as, but not limited to, a K-means clustering algorithm or a support-vector clustering algorithm, to cluster each of the plurality of enterprise networks 104. As one example, the density-based clustering technique may cluster the plurality of enterprise networks 104 based on the number of client devices per access point for each different type of enterprise network, e.g., academic institutions, corporations, etc.

Based on the clustered enterprise networks, the machine learning model 130 may be trained to associate the clustered enterprise networks with different enterprise architectures. For example, the machine learning model 130 may be trained using an association algorithm, such as, but not limited to, an apriori algorithm, eclat algorithm, or a frequent-pattern growth (FP-growth) algorithm to determine a correlation between the different categories of enterprises and their respective enterprise architectures.

In some embodiments, the machine learning model 130 may be further trained using a sequence modeling algorithm. For example, the machine learning model 130 may be trained using data collected from the plurality of enterprise networks 104 using a sequence generation algorithm. In some embodiments, the data collected from the plurality of enterprise networks 104 may be used as a training data set to enable the machine learning model 130 to generate enterprise architectures similar to those of the training data.

In some embodiments, the machine learning model 130 may be further trained using a statistical inference algorithm. For example, the machine learning model 130 may be trained using data collected from the plurality of enterprise networks 104 to enable the machine learning model 130 to generate enterprise architectures based on statistical analyses of the plurality of enterprise networks 104. Using the number of devices per access point as an example, the machine learning model 130 may be trained to analyze the number of devices per access point, and then recommend, based on an average number of devices per access point of similar enterprise networks, the number of devices per access point that provides the best performance. Continuing with this example, the machine learning model 130 may also generate the recommendation based on a standard deviation of the average number of number of devices per access point.

In some embodiments, the machine learning model 130 may be further trained using a collective inference algorithm. For example, the machine learning model 130 may be trained using the collective inference algorithm in order to make statistical analyses about the enterprise architectures of the plurality of enterprise networks 104 and to simultaneously classify and label the plurality of enterprise networks 104 based on their respective architectures.

The network 125 may include one or more wired and/or wireless networks. For example, the network 125 may include a cellular network (e.g., a long-term evolution (LTE) network, a code division multiple access (CDMA) network, a 3G network, a 4G network, a 5G network, another type of next generation network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, and/or the like, and/or a combination of these or other types of networks.

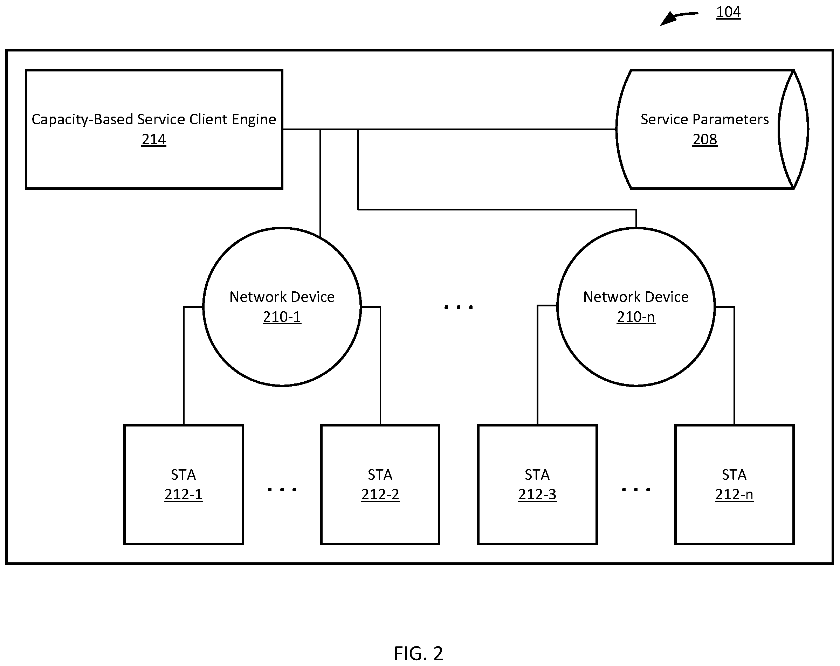

Referring to FIG. 2, each of the plurality of enterprise networks 104 may include a service parameters datastore 208, network devices 210-1 to 210-n (collectively referred to as network devices 210), stations 212-1 to 212-n (collectively referred to as stations 212) respectively coupled to the network devices 210, and a capacity-based service client engine 214.

In some embodiments, the stations 212 may be client devices, such as wired or wireless devices connect to the network 125. In some embodiments, the stations 212 may be, for example, a mobile phone (e.g., a smart phone, a radiotelephone, etc.), a handheld computer, a gaming device, a wearable communication device (e.g., a smart wristwatch, a pair of smart eyeglasses, etc.), a desktop computer, a laptop computer, a tablet computer, or a similar type of device. For example, in some embodiments, the stations 212 may be wireless devices, such as a thin client device or an ultra-thin client device that includes a wireless network interface, through which the wireless device can receive data wirelessly through a wireless communication channel. The wireless network interface may be used to send data generated by the wireless device to remote or local systems, servers, engines, or datastores through the network 125. The stations 212 may be referred to as being "on" a wireless network of the enterprise network 104, but may not be the property of the enterprise network 104. For example, the stations 212 may be privately owned devices that access services through a guest or other network of the enterprise network 104, or IoT devices owned by the enterprise network 104 that are on the wireless network.

The network devices 210 may be, for example, routers, switches, access points, gateways, including wireless gateways, repeaters, or any combinations thereof, as should be understood by those of ordinary skill in the art.

The capacity-based service client engine 214 may be an engine that enables a user or artificial agents of the each of the plurality of enterprise networks 104 to provide information about the enterprise network 104 to the server 120 and to receive recommendations for an enterprise architecture from the server 120. In some embodiments, the service parameters datastore 208 may be implemented as a shared database that may be updated by more than one party, a party other than an enterprise could access traffic either via a mirror port within a private network of the enterprise or traffic that is transmitted into or out of the private network on a medium to which the party other than the enterprise has access.

In some embodiments, each of the plurality of enterprise networks 104 may store information related to the enterprise architecture in the service parameters datastore 208 of FIG. 2. The service parameters datastore 208 may include network service parameters for the enterprise. For example, the service parameters 208 may include software and network licenses, green network resource consumption parameters, and enterprise-specific network access policies, to name a few categories of parameters. In some embodiments, the service parameters datastore 208 also includes consumption parameters associated with utilization of services. The information may be implementation- and/or configuration-specific, and may include information related to the logical and physical data assets, as well as the corresponding data management resources, and the technical architecture of the enterprise. The information may include other information, such as business information, such as budgetary goals, green initiatives, etc. For example, green initiatives may include, but are not limited to, reducing power consumption of access devices by shutting down components of the access devices, e.g., a radio, when there are no client devices connected to the access device, operating a component of an access device at a lower frequency, reducing a transmission power of the access devices, reducing speed of an network port of the access device, and/or move client devices to a neighboring accessing and putting the access device in a sleep mode.The information may also include third party analytics from government databases, business databases, news sources, social media, or the like. The information may also include data obtained from monitoring network traffic and performance, energy performance, device utilization, data center performance, resource deployment performance, power management performance, network security performance, localized human activity, or the like.

In some embodiments, the network traffic and performance information may include, for example, bandwidth, throughput, latency, jitter, and error rate of the devices operating on the enterprise architecture. The network traffic and performance information may also include information, such as the number of devices per access point and a corresponding quality of service of the access point. In some embodiments, the energy performance may include product longevity, data center design, resource deployment, power management, materials recycling, cloud computing, edge computing, telecommuting. In some embodiments, the data center performance information may include information technology (IT) system parameters, environmental conditions, air management, cooling system parameters, electrical system parameters, and the like. In some embodiments, the resource deployment performance information may include algorithmic efficiency, resource allocation, virtualization, terminal servers, or the like. In some embodiments, the power management performance information may include operating system support, power supply, storage, video card usage, display characteristics, or the like. In some embodiments, the network security performance information may include firewalls, email security, anti-virus/anti-malware software, network segmentation, access control, application security, behavioral analytics, data loss prevention, intrusion prevention, mobile device security, virtual private network (VPN) security, web security, wireless security, or the like.

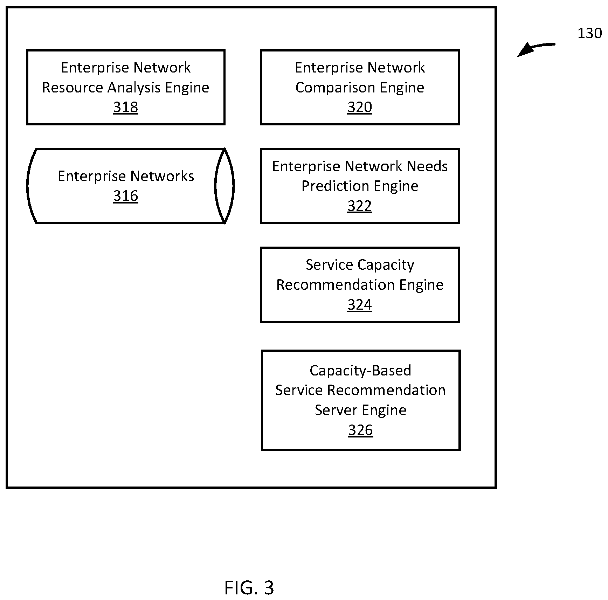

As shown in FIG. 3, the server 120 may include an enterprise networks datastore 316, and the machine learning model 130 may include an enterprise network resource analysis engine 318, an enterprise network comparison engine 320, an enterprise network needs prediction engine 322, a service capacity recommendation engine 324, and a capacity-based service server engine 326.

The enterprise networks datastore 316 may store information related to real-world resources of each of the plurality of enterprise networks 104. This information may be implementation- and/or configuration-specific, but for illustrative purposes, may include knowledge of licenses, network capabilities, green initiatives, or the like. In some embodiments, the enterprise networks datastore 316 may store information received from the service parameters datastore 208 of each of the plurality of enterprise networks 104. In some embodiments, the enterprise networks datastore 316 may also store data from third party analytics from government databases, business databases, news sources, social media, or the like. The data can also be obtained from monitoring network traffic, device utilization, localized human activity, or the like.

In some embodiments, the enterprise network resource analysis engine 318 may analyze resources of each the plurality of enterprise networks 104 represented in the enterprise networks datastore 316. The enterprise network resource analysis engine 318 may store analytics obtained from analyzing each of the plurality of enterprise networks 104 in the enterprise networks datastore 316. In some embodiments, the enterprise network resource analysis engine 318 may use information about the enterprise networks 104 to generate a health score for each of the plurality of enterprise networks 104. As one example, the enterprise network resource analysis engine 318 may determine a health score based on the network performance of each of the plurality of enterprise networks 104.

In some embodiments, the enterprise network comparison engine 320 may be an engine that compares enterprise network parameters for one of the enterprise networks 104 with those of another of the enterprise networks 104 using information in the enterprise networks datastore 316. In some embodiments, the enterprise network comparison engine 320 may compare one of the enterprise networks 104 with other similar enterprises, such as by business sector, enterprise type, e.g., educational institutions, office buildings, corporate campuses, public shopping centers, public parks, employee count, revenue, or the like. The comparison may be useful in order to generate enterprise architectures that closely match that enterprise architectures of enterprises having a similar profile.

In some embodiments, the enterprise network needs prediction engine 322 may determine a resource utilization plan that is appropriate for enterprise needs and goals based on from available resources, resource utilization data and analytics, and business plans. This can include reducing the number of capacity of licenses if they are being underused, turning off or putting into sleep mode devices that are being underutilized, directing traffic paths through underutilized network devices, controlling lighting or HVAC in accordance with human activity in locations, preparing service orders for devices that appear to be faulty, reconfiguring devices to match apparent needs, to name several possibilities. This may also include predicting needs based on peak and off-peak periods based on the individual needs of each of the plurality of enterprise networks 104. Using educational institutions as one example, demands for network resources may be reduced during, for example, summer and winter recesses (e.g., off-peak periods), whereas demands for network resources may surge when classes are in session (e.g., a peak period). This may be achieved using a modelling pipeline that may be based on a combination of one or more techniques, such as a pattern mining technique, a recursive feature elimination technique, a gradient boosting technique, and/or the like. The pattern mining technique may be, for example, a sequential pattern mining technique (e.g. a sequential pattern discovery using equivalence classes (SPADE) technique, a frequent closed sequential pattern mining technique, a vertical mining of maximal sequential patterns (VMSP) technique, and/or the like). In further embodiments, the modeling pipeline may be based on one or more data mining techniques, such as tracking patterns, classification, association, or clustering.

In some embodiments, the service capacity recommendation engine 324 creates recommendations regarding resource utilization for existing enterprise networks, e.g., the plurality of enterprise networks 104, or when developing a new enterprise network. The recommendations may emphasize cost reductions, energy efficiency, infrastructure build-out, and disaster recovery preparedness. It should be understood that these are merely examples, and that other recommendations are further contemplated in accordance with aspects of the present disclosure.

In some embodiments, the capacity-based service recommendation server engine 326 may act as a server to a client of the capacity-based service client engine 314. Communications from the plurality of enterprise networks 104 may be characterized as passing through the capacity-based service server engine 126 including traffic, traffic analytics, energy consumption, or the like, that may be detected automatically with appropriately configured devices, and resource parameters, green initiative goals, security goals, or the like that may be provided from relevant agents of the enterprise networks 104. Such data is assumed to be stored in the enterprise networks datastore 316.

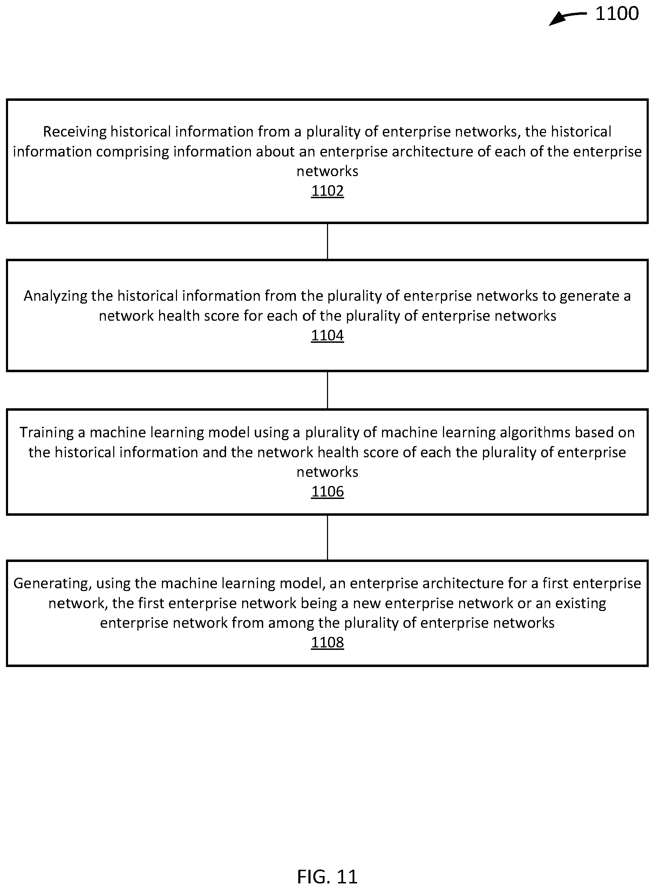

FIG. 11 is a flow chart of an example method 1100 for generating an enterprise architecture. In some embodiments, one or more processes described with respect to FIG. 11 may be performed by one of the devices discussed with respect to FIGS. 1-3.

At 1102, the method 1100 may include receiving, at a server, e.g., the server 102 of FIG. 1, historical information from a plurality of enterprise networks, e.g., the plurality of enterprise networks 104 of FIG. 1. In some embodiments, the historical information may include information about the architecture of each of the enterprise networks. For example, the historical information may include the information about each of the plurality of enterprise networks from the respective datastores 208.

At 1104, the method may include analyzing, by the server 120, the historical information from the plurality of enterprise networks to generate a network health score for each of the plurality of enterprise networks. For example, the server 120 may be configured to calculate the health score for the enterprise architecture of each of the plurality of enterprises 104. This may be achieved an enterprise network resource analysis engine 318, as shown in FIG. 3. The enterprise network resource analysis engine 318 may analyze resources of each of the enterprise networks 104 and store analytics obtained from these analyses in the enterprise networks datastore 316. In some embodiments, the enterprise network resource analysis engine 318 may use the information about the plurality of enterprise networks 104 to determine a health score of each of the enterprise networks 104.

In some embodiments, the health score may be, for example, based on a scale from zero (0) to one hundred (100), with higher health scores indicating better performance of the enterprise architecture of the enterprise network 104. In some embodiments, generating the network health score for each of the plurality of enterprise networks 104 may include generating an overall network health score for each of the plurality of enterprise networks based on a plurality of sub-network health scores. For example, the plurality of subcomponents may include, but are not limited to, a device score, a security score, a service score (e.g., domain name system (DNS)/ dynamic host configuration protocol (DHCP)), an applications services score, a Wi-Fi score, a network services score (e.g., a round-trip-time to an outside network), and/or a client score. It should be understood by those of ordinary skill in the art that these are merely examples of sub-components, and that more or less sub-components may be used to determine the overall network health score. In some embodiments, the health score may be an average of the plurality of subcomponents. In some embodiments, the plurality of subcomponents may be given different weights when determining the health score. In some embodiments, the weight assigned to any given subcomponent may vary from one type of enterprise to another based on the priorities of the enterprise. For example, some enterprises may emphasis providing the best wireless connection possible to users, such that the Wi-Fi score may be given more weight than any of the other subcomponents.

At 1106, the method 1100 may also include training a machine learning model, e.g., the machine learning model 130 of FIG. 1, using a plurality of machine learning algorithms based on the historical information and the network health score of each the plurality of enterprise networks. In some embodiments, the machine learning model 130 may be trained using supervised machine learning algorithms, unsupervised machine learning algorithms, or a combination of both, to categorize each of the plurality of enterprise networks 104, to associate the clustered enterprise networks with different enterprise architectures, generate enterprise architectures similar to those of the training data, generate enterprise architectures based on statistical analyses of the plurality of enterprise networks 104, to make statistical analyses about the enterprise architectures of the plurality of enterprise networks 104, and/or to simultaneously classify and label the plurality of enterprise networks 104 based on their respective architectures, as discussed herein.

At 1108, the method may further include generating, using the machine learning model 130, an enterprise architecture for a first enterprise network. In some embodiments, the first enterprise network may be a new enterprise network or an existing enterprise network from among the plurality of enterprise networks 104. In some embodiments, generating the enterprise architecture for the first enterprise network may include identifying, using the machine learning model 130, a subset of enterprise networks from among the plurality of enterprise networks 130 with a same category as the first enterprise network, comparing the first enterprise network to the subset of enterprise networks to identify at least one enterprise network, with the comparison being based on one or more parameters for generating the enterprise architecture for the first enterprise network, and generating the enterprise architecture for the first enterprise network based on the enterprise architecture of the identified at least one enterprise network.

That is, by aggregating and analyzing the information of each enterprise network of the plurality of enterprise networks 104 and classifying each of the plurality of enterprises networks 104, the server 120, using the machine learning model 130, may provide recommendations for enterprises of a similar type. For example, the server 120 may receive a request to generate an enterprise architecture for a new enterprise network, and the server 120 may use the machine learning model 130 to identify enterprise networks that match a profile of the requesting enterprise network and retrieve enterprise architecture information for the identified enterprise networks. For example, the request may be from an enterprise, such as a school, and the sever 120, using the machine learning model 130, may identify other enterprise networks having a similar profile, e.g., other schools having a similar size, location, number users, number of connected devices, etc.

In some embodiments, the request may include a request to prioritize one of the plurality of health score components. In some embodiments, the request may also include one or more parameters. For example, the one or more parameters may include a budget parameter, e.g., a projected budget for the enterprise architecture, a priority parameter, e.g., a request to prioritize one of the plurality of health score components, a geographic parameter, e.g., a size and location of the enterprise, and a complexity parameter, e.g., a request to limit a complexity of the enterprise architecture for simplified implementation or a request for multiple sub-architectures within the enterprise architecture, e.g., a first sub-architecture for less dense locations within the enterprise, such as an administrative building, academic buildings, and student housing of a university, and a second sub-architecture for more dense locations, such as stadiums and arenas, of the university. It should be understood by those of ordinary skill in the arts that these are merely example parameters and that other parameters are further contemplated in accordance with aspects of the present disclosure. In response, the machine learning model 130 may identify an enterprise architecture for a similar enterprise having the highest score for the specified health score component and/or matching parameters. Once similar enterprise networks have been identified, the machine learning model 130 may generate an enterprise architecture for the requesting enterprise network based on the enterprise architectures of the identified enterprise networks.

In some embodiments, the server 120 may be also configured to continuously receive the historical information from each of the plurality of enterprise networks 104, and update the network health score for each of the plurality of enterprise networks 104 based on continuously receiving the historical information. In some embodiments, the machine learning model 130 may be continuously trained based on the continuously received historical information and the updated network health scores. That is, the server 120 may continuously monitor each of the plurality of enterprises 104, and how changes in the enterprise architecture affect each of the plurality of subcomponents of the health score and the overall health score of the enterprise. For example, in some embodiments, the server 120 may monitor the number of stations 212 connected to an access point of the enterprise and how this affects the Wi-Fi component of the health score, as well as the overall health score of the enterprise, e.g., at which point does the number of stations 212 reduce the quality of the wireless connection provided by the access point below a threshold level. As a result, the machine learning model 130 may continuously learn about how different changes effect enterprise architectures and apply that that knowledge to provide recommendations to similar enterprises. For example, with respect to existing enterprises, the machine learning model 130 may learn how certain changes will affect overall health score, e.g., improve or degrade the health score, of the enterprise architecture, and the machine learning model 130 may thus provide recommendations accordingly. In some embodiments, for existing enterprises, the recommendations may be based on a combination of knowledge learned from other enterprises of a similar type, as well as the current enterprise.

In some embodiments, the server 120 may also monitor a performance of the first enterprise network, calculate a change in the health score for the first enterprise network based on the monitored performance, determine a cause of the change in the health score, and generate one or more recommendations for updating the enterprise architecture for the first enterprise network to modify the cause of the change in the health score. That is, in some embodiments, the server 120 may continuously monitor a performance of each of the plurality of enterprise networks 104 and calculate a health score for of each of the plurality of enterprise networks 104 based on the performance. Additionally, the machine learning model 130 may analyze the updated health score of each of the plurality of enterprise networks 104 in order to provide updated recommendations as improvements to the enterprise architecture are identified. This may be achieved as the machine learning model 130 is continuously learning from changes made to the plurality of enterprises 104 and updating their health scores accordingly, such that the recommendations are tailored specifically to each individual enterprise network based on the most up to date information available to the machine learning model 130.

In some embodiments, the recommendations may be dynamically updated based on the specific needs of the enterprise network at a particular time. For example, some enterprise networks may experience surges in network demands on a seasonal basis, e.g., shopping centers in holiday seasons or during back-to-school season, amusement parks during the summer, or some enterprise networks may experience fluctuations in network demands, e.g., academic institutions may experience fluctuations in network demands throughout the academic school year. To address these changes, the machine learning model 130 may provide dynamic recommendations to the enterprise networks that enable the enterprise networks to change the enterprise architectures as needed based on the network demands at that time. To achieve this, the machine learning model 130 may be trained on historical demand on such fluctuations and provide recommendations based on predicted network demands, such that administrators may implement any changes in a timely manner.

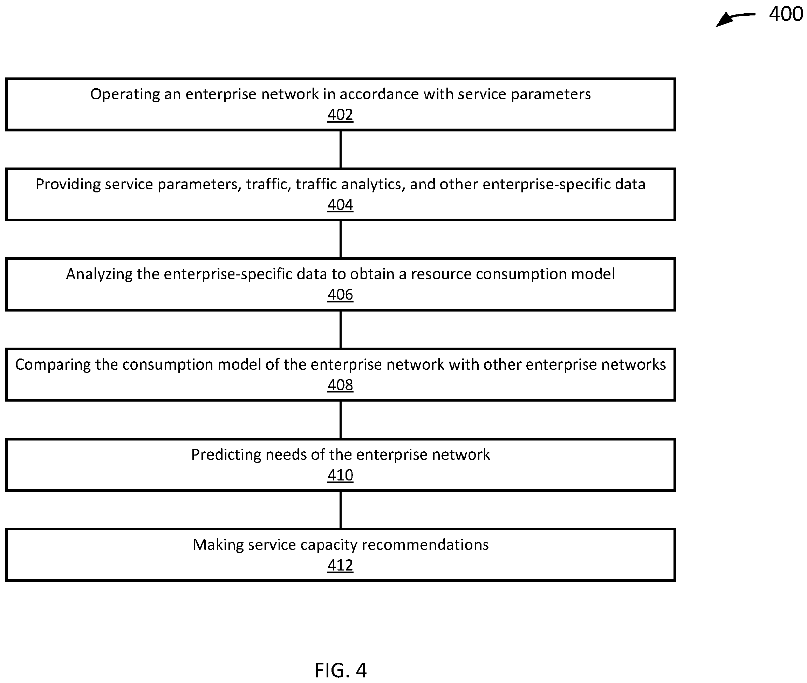

FIG. 4 depicts a method 400 for capacity-based service provisioning. In some embodiments, one or more processes described with respect to FIG. 4 may be performed by one of the devices discussed with respect to FIGS. 1-3. While the description of the method 400 is made with respect to a single enterprise network 104, it should be understood by those ordinary skill in the art that the functions described herein with respect to FIG. 4 may be performed for each of the plurality of enterprise networks 104.

At 402, the method 400 includes operating an enterprise network, e.g., one of the plurality of enterprise networks 104 of FIG. 1, in accordance with service parameters of the enterprise network. The enterprise network can include network devices, such as the network devices 210 of FIG. 2, that provide network services to stations, such as the stations 212 of FIG. 2. The service parameters can include the service parameters discussed herein, such as hardware requirements, software, network traffic, external site, licenses, as well as service parameters related to enterprise goals, such as service parameters associated with security, green initiatives, quality of service, or other initiatives. These service parameters may be stored in a service parameters datastore, such as the service parameters datastore 208 of FIG. 2, and may include also capacity parameters and consumption parameters associated with services utilization.

At 404, the method 400 may also include with providing the service parameters, traffic, traffic analytics, and other enterprise-specific data to a server, e.g., server 120 of FIG. 1. This may be achieved using the capacity-based service client engine 214 of FIG. 2, which may transmit the data over the network 125 to the server 120. In some embodiments, the service parameters may also be provisioned through another mechanism, such as a mirror port through which traffic may be analyzed, direct storage to a shared database, or the like.

At 406, the method 400 may include analyzing, using the machine learning model 130 of the server 120, the service parameters to obtain a resource consumption model. For example, the machine learning model 130, using the enterprise network analysis engine 318 of FIG. 3, may analyze the service parameters to determine, based upon a given set of service capacity and consumption of the enterprise 104, a ratio of consumed to available network resources. For example, with respect to network traffic, the available and consumed network resources may vary over time, by location, or the like. In turn, the analysis performed by the machine learning model 130 may include identifying patterns of availability and/or consumption. These patterns may be modeled using, for example, a modelling pipeline that may be based on a combination of one or more techniques, such as a pattern mining technique, a recursive feature elimination technique, a gradient boosting technique, and/or the like. The pattern mining technique may be, for example, a sequential pattern mining technique (e.g. a sequential pattern discovery using equivalence classes (SPADE) technique, a frequent closed sequential pattern mining technique, a vertical mining of maximal sequential patterns (VMSP) technique, and/or the like). In further embodiments, the modeling pipeline may be based on one or more data mining techniques, such as tracking patterns, classification, association, or clustering. The modeling pipeline may for any service parameters, such as, but not limited to, software licensing capacity, green initiative goals, or the like.

At 408, the method 400 may further include comparing, using the enterprise network comparison engine 320 of FIG. 3, the consumption model of the enterprise network to a consumption model of other enterprise networks. In some embodiments, the comparison may be with other enterprise networks that are similar to the enterprise network in some respect, such as by type, industry, size, geographic location, or the like. Some administrators of the enterprise networks may want to know how their networks compare to similar enterprise networks, and model their enterprise architectures in a similar manner in order to match quality of service, green initiative, security requirements (e.g., a number of virtual Local Area networks (VLANs), an authentication protocol, such as 802.1x or using a pre-share key (PSK)), etc.

At 410, the method 400 may further include predicting, using the enterprise network needs prediction engine 322 of FIG. 3, needs of the enterprise network, such addressing service that drops below a threshold quality level, addressing anticipated changes to service, e.g., during seasonal changes, when carrying out a deployment of new resources, or during a maintenance window, addressing underutilization of licenses, or the like. In some embodiments, the prediction may include comparing a historical consumption model with a predictive consumption model. The predictive consumption model may be generated using the historical consumption model of the enterprise and a comparison of a historical consumption model of a similar enterprises that implemented similar initiatives and the resulting effect they had on enterprise. In some embodiments, the predictive model may be generated using the historical consumption model of the enterprise and known capabilities of new components of the enterprise architecture (e.g., upgraded access points with known specifications). In some embodiments, the predictive model may be generated using the historical consumption model of the enterprise and expected changes to a location of the enterprise (e.g., if an office moves from one location to another or an additional building to a campus). It should be understood the prediction may consider granular details when they are available (e.g., a specific user's consumption of wireless resources when that specific user is moved from one office to another).

At 412, the method 400 may include making, the service capacity recommendation engine 324 described of FIG 3, service capacity recommendations. In some embodiments, the recommendations may be responsive to a historical, potentially time- or location-varying, ratio of service capacity to service consumption, comparisons between the enterprise network and other similar enterprises, and/or to future needs, whether they are needs associated with a dearth of network, economic, or other resources or needs to attain goals of the enterprise networks. In some embodiments, a recommendation may include a recommendation to reduce capacity for a given resource, potentially even to the point where quality of service drops, if it satisfies an objective of the enterprise, e.g., such as reducing costs.

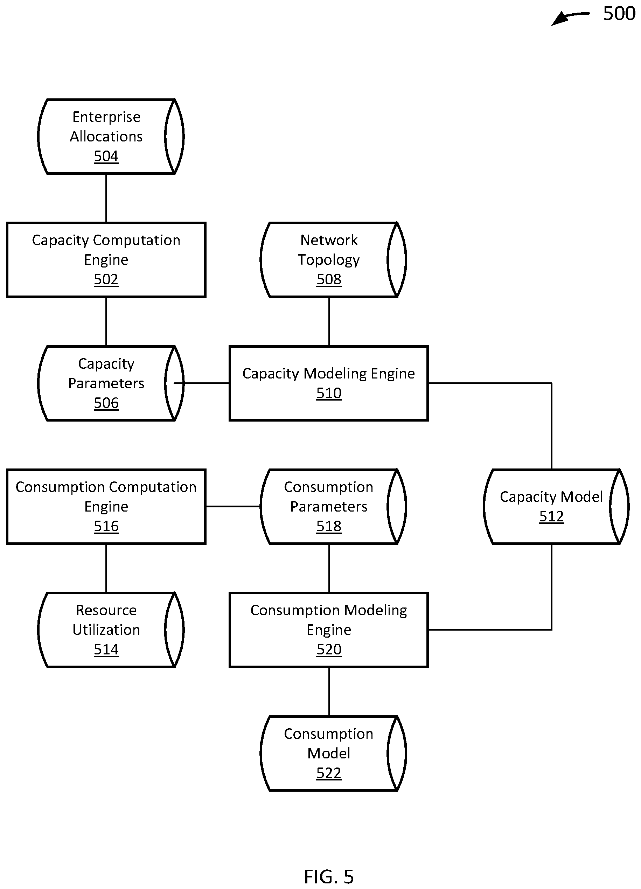

FIG. 5 depicts a diagram 500 of an example of the enterprise network resource analysis engine 318 of FIG. 3. The diagram 300 includes a capacity computation engine 502, an enterprise allocations datastore 504, a capacity parameters datastore 506, a network topology datastore 508, a capacity modeling engine 510, a capacity model datastore 512, a resource utilization datastore 514, a consumption computation engine 516, a consumption parameters datastore 518, a consumption modeling engine 520, and a consumption model datastore 522. In some embodiments, the engines 502, 510, 516, 520 correspond to an engine similar to the enterprise network resource analysis engine 318 of FIG. 3, and the datastores 504, 506, 508, 512, 514, 522 correspond to a datastore similar to the enterprise networks datastore 316 of FIG. 3. While the description of the diagram 500 is made with respect to a single enterprise network 104, it should be understood by those ordinary skill in the art that the functions described herein with respect to FIG. 5 may be performed for each of the plurality of enterprise networks 104.

In some embodiments, the capacity computation engine 502 may determine a capacity for an enterprise network, e.g., enterprise network 104. For example, in some embodiments, the capacity computation engine 502 may use licenses information and licensing limitations of enterprise network 104 to determine licensing usage of the enterprise network 104. In some embodiments, the licenses information may include a number of available license and a number of licenses currently being used. The licenses information may be obtained from the enterprise network 104 itself, a provider of the license, by a third party, or derived from third party data. The licensing limitations of the enterprise network 104 may be from hardware, software, or self-induced limitations, such as self-induced limitations including green initiatives, expense caps (e.g., limiting an amount spent on annual licenses), security initiatives, or the like.

In some embodiments, the enterprise allocations datastore 504 may be a datastore that indicates how capacity is allocated within an enterprise network 104. For example, how capacity may be allocated according to users, groups, divisions, locations, or the like. In some embodiments, understanding how the capacity is allocated may be useful for determining how capacity may be reallocated. In some embodiments, the capacity parameters datastore 506 may store information associated with the capacity allocations throughout the enterprise network 104, e.g., a capacity (e.g., a software license, a network license, a limitation, or the like) and a capacity allocation to enterprise network employees, offices, user groups, or the like in accordance with current licensed and limited parameters.

In some embodiments, the network topology datastore 508 may store information associated with network devices, software resources, and users within the enterprise network 104. The capacity allocations may be specific to specific branches (e.g., between network devices), VLANs, users, or the like, of the network topology. In some embodiments, the capacity modeling engine 510 may create a capacity model using data structures of the capacity parameters datastore 506 and the network topology datastore 508. Advantageously, the models may be used to graphically represent the capacity and capacity allocations within the enterprise network 104. In some embodiments, the capacity model datastore 512 may store information associated with components of the enterprise network and the capacity allocations associated with those components. In some embodiments, the capacity models may further illustrate the capacity with different colors, shapes, or sizes to represent different capacities in association with a component or between components.

In some embodiments, the resource utilization datastore 514 may store traffic parameters, hardware utilization, software utilization, or the like, and the consumption computation engine 516 may compute resource utilization using data from the resource utilization datastore 514. In some embodiments, the consumption parameters datastore 518 may store information related to resource utilization throughout the enterprise network 104. For example, the information may include utilized seats of a software license, computer resource expended, traffic parameters between network nodes, or the like. The consumption parameters may have time-space parameters indicative of where the resource is consumed (e.g., by device) and when the resource is utilized. In some embodiments, the consumption modeling engine 520 may apply a capacity model from the capacity model datastore 512 to the consumption parameters from the consumption parameters datastore 518. Because the capacity model includes network topology and resource capacity allocations, the consumption parameters may be matched to the model at the relevant network nodes in association with the relevant capacity allocations. Advantageously, in some embodiments, the models may be used to graphically represent capacity and capacity allocations within an enterprise network with an overlay of actual resource utilization.

In some embodiments, the consumption model datastore 522 may store information related to the components of the enterprise network 104 and capacity allocations associated with those components with an overlay of resource utilization. For example, the consumption models may be represented graphically, with consumption being associated with different colors, shapes, or sizes to represent different utilizations of network resources. In some embodiments, an under-utilized resource may be represented in green, while an over-utilized resource may be represented in red, with potentially thicker lines between network nodes to indicate the degree of under- or over-utilization. In some embodiments, a filter may be applied to the model to emphasize cost allocations, quality of service, energy consumption, or other aspects of utilization that are of interest to an administrator of the enterprise.

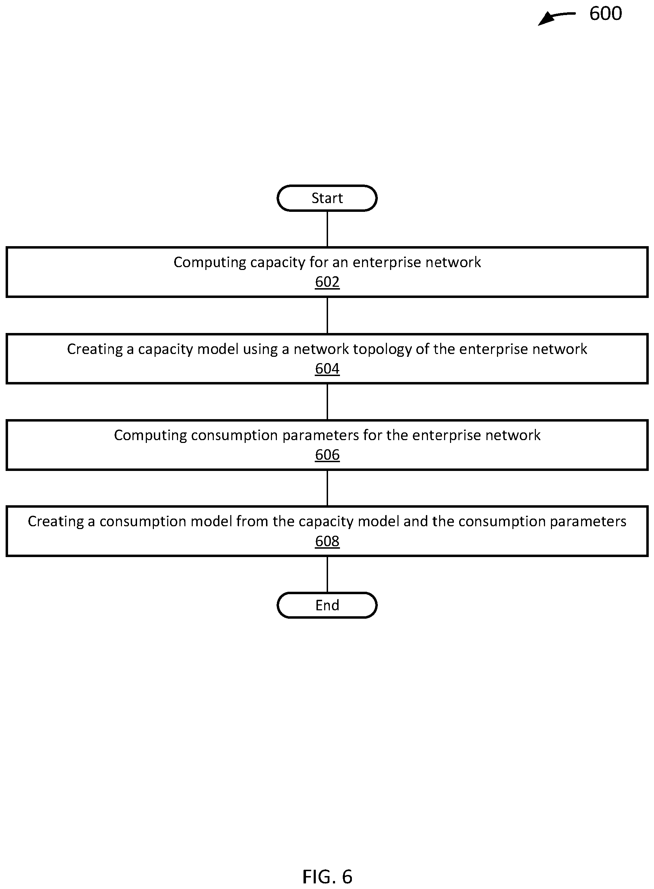

FIG. 6 depicts a method 600 of an example of a method for enterprise network resource analysis. While the description of the method 600 is made with respect to a single enterprise network 104, it should be understood by those ordinary skill in the art that the functions described herein with respect to FIG. 6 may be performed for each of the plurality of enterprise networks 104.

At 602, the method 600 includes determining, using the capacity computation engine 502 of FIG. 5, a capacity for an enterprise network, such as the enterprise network 104 of FIG. 1. The capacity may be determined by analyzing resources available to the enterprise network and any limitations on those resources. The result of a capacity determining may be a capacity parameter.

At 604, the method 600 may include creating, using the capacity modeling engine 510 of FIG. 5, a capacity model using a network topology of the enterprise network 104. By mapping a capacity parameter to the network topology, a capacity model can represent not only capacity available to an enterprise network, but also where that capacity is available, if applicable.

At 606, the method 600 may include determining, using the consumption computation engine 516 of FIG. 5, consumption parameters for the enterprise network 104. In some embodiments, the consumption parameters may be determined by analyzing resource utilization, including traffic, compute time, allocated software license seats, or the like. The result of a consumption computation may be referred to as a consumption parameter.

At 608, the method 600 may include creating, using the consumption modeling engine 520 of FIG. 5, a consumption model from the capacity model and the consumption parameters. In some embodiments, the consumption parameters may be provided as an overlay over the capacity model to create a consumption model. The consumption model may serve to illustrate what resources are being utilized most efficiently in accordance with goals of the enterprise network 104 and within the network topology.

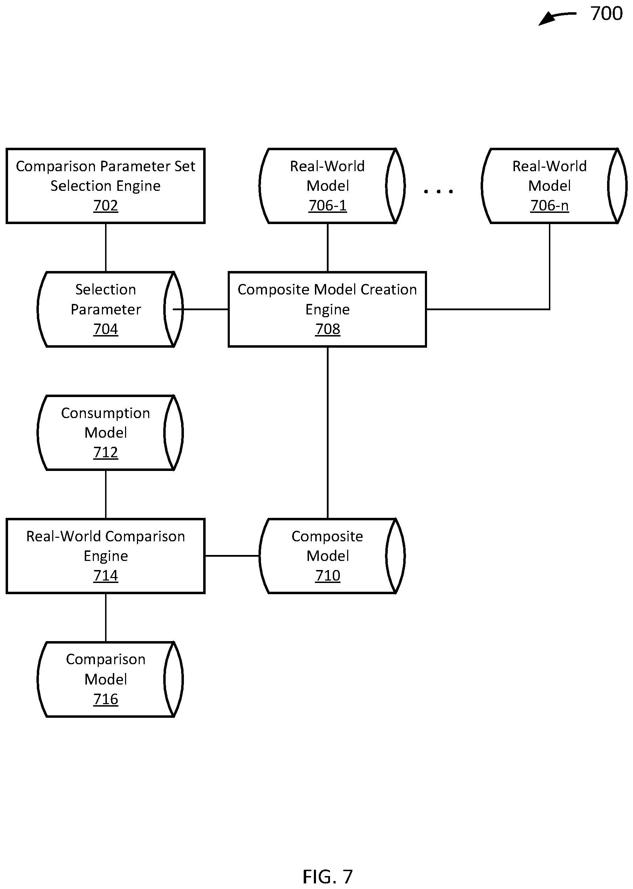

FIG. 7 depicts a diagram 700 of an example of an enterprise network comparison engine. The diagram 700 includes a comparison parameter set selection engine 702, a selection parameter datastore 704, a real-world model 706-1 to a real-world model 706-n (collectively, the real-world models 706), a composite model creation engine 708, a composite model datastore 710, a consumption model datastore 712, a real-world comparison engine 714, and a comparison model datastore 716. In some embodiments, the engines 702, 708, 714 may correspond to an engine similar to the enterprise network comparison engine 320 of FIG. 3 and the datastores 704, 706, 710, 712, 716 correspond to a datastore similar to the enterprise networks datastore 316 described with reference to FIG. 3. While the description of the diagram 700 is made with respect to a single enterprise network 104, it should be understood by those ordinary skill in the art that the functions described herein with respect to FIG. 7 may be performed for each of the plurality of enterprise networks 104.

The comparison parameter set selection engine 702 may receive one or more enterprise parameters from the enterprise network 104 to which other enterprises are to be compared. In some embodiments, the enterprise parameters may be determined automatically by attempting to match enterprises in the same industry, of the same size, in the same geographic area, or the like. Alternatively, the enterprise parameters may be selected in accordance with a growth plan (or reduction in force) or for some other reason. The enterprise parameters may also be limited to specific aspects of enterprises, such as network device allocation or capabilities, software license costs, or the like.

In some embodiments, the selection parameters datastore 704 may store a set of parameters for matching to enterprise network parameters to which a comparison is desired. In some embodiments, the real-world models 706 may be consumption models for enterprise networks other than an enterprise network to which the enterprise networks are to be compared. In some embodiments, the real-world models 706 may include a consumption model of the enterprise network 104 as well. In some embodiments, the real-world models 706 may be similar to the consumption models described with reference to FIG. 5. Advantageously, in some embodiments, a single model may represent multiple enterprise networks with data available to the single entity, making the data richer, and the real-world models 706 may be used with the rich data and the models may be anonymized later.

In some embodiments, the composite model creation engine 708 may use the real-world models 706 that match a selection parameter of the selection parameters datastore 704. In some embodiments, the composite model creation engine 708 may consider a hypothetical model, instead of or in addition to the real-world models 706, that matches the selection parameter. In some embodiments, the composite model can include an average or some other statistical representation of the real-world models 706, and may incorporate knowledge about, for example, device capabilities to provide alternative models that account for differentiations between two or more of the real-world models 706.

In some embodiments, the composite model datastore 710 may store information associated with a composite representation of the real-world models 706, which may be referred to as a composite model. The composite model may take into account available real-world models 706 that match the selection parameter. In some embodiments, the composite model may be similar to the consumption model datastore 522 described with reference to FIG. 5, except that it may not be representative of a single enterprise network.

In some embodiments, the consumption model datastore 712 may store consumption models that represent components of the enterprise network 104 and capacity allocations associated with those components with an overlay of resource utilization. In some embodiments, the consumption model may be similar to the consumption model datastore 522 described with reference to FIG. 5.

In some embodiments, the real-world comparison engine 714 compare a consumption model of the consumption model datastore 712 to a composite model of the composite model datastore 710, which may yield a comparison model that is useful for illustrating variance between the enterprise network and similar (or as selected) enterprise networks. The comparison model datastore 716 may store the comparison models. Advantageously, the consumption model of an enterprise network may be discernable to an administrator of the enterprise network, while the composite model anonymizes data associated with enterprise networks to which the enterprise network is being compared.

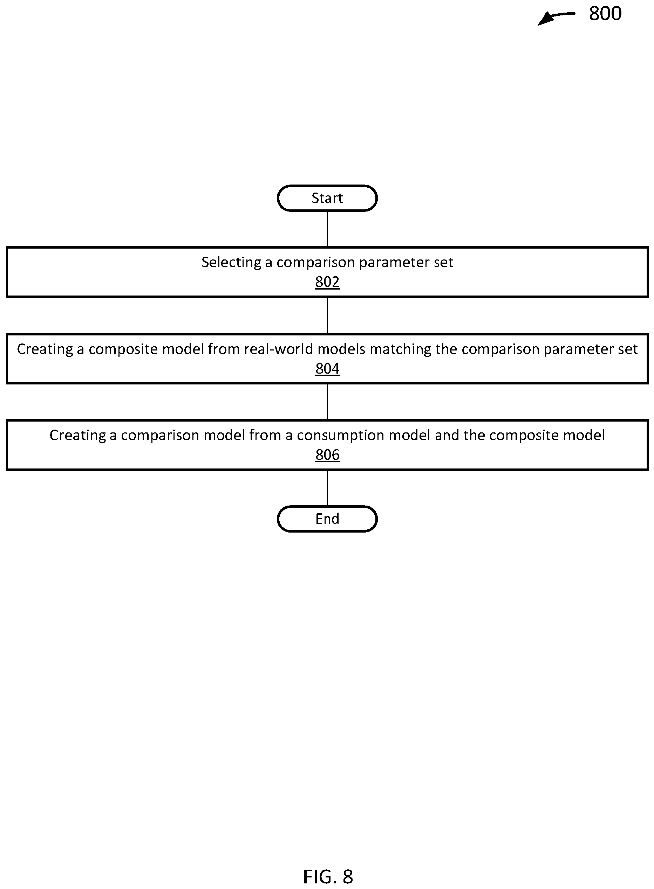

FIG. 8 depicts a method 800 for enterprise network comparison. While the description of the method 800 is made with respect to a single enterprise network 104, it should be understood by those ordinary skill in the art that the functions described herein with respect to FIG. 8 may be performed for each of the plurality of enterprise networks 104.

At 802, the method 800 may include selecting, using the comparison parameter set selection engine 702 of FIG. 7, a comparison parameter set. In some embodiments, the comparison parameter set may include a threshold, a range, or some other value to which a numerical (or alphanumerical) comparison may be made. The comparison parameter set may include one or more enterprise parameters of enterprise networks to which a comparison is desired.

At 804, the method 800 may include creating, using the composite model creation engine 708 of FIG. 7, a composite model from real-world models with parameters that match the comparison parameter set. In some embodiments, the composite model may include an average or some other statistical representation of the real-world models, and may incorporate knowledge about device capabilities to provide alternative models that account for differentiations between two or more of the real-world models.

At 806, the method 800 may include creating, using the real-world comparison engine 714 of FIG. 7, a comparison model from a consumption model of a target enterprise network and the composite model. In some embodiments, the comparison model may be created upon request from an administrator of the target enterprise network. For example, the administrator may send a request for a comparison model to be created. As another example, the comparison model could be created on behalf of the target enterprise network and provided to a receiving administrator. In some embodiments, the receiving administrator may be the same as the requesting administrator, while in other embodiments, the receiving administrator may be different than the requesting administrator.

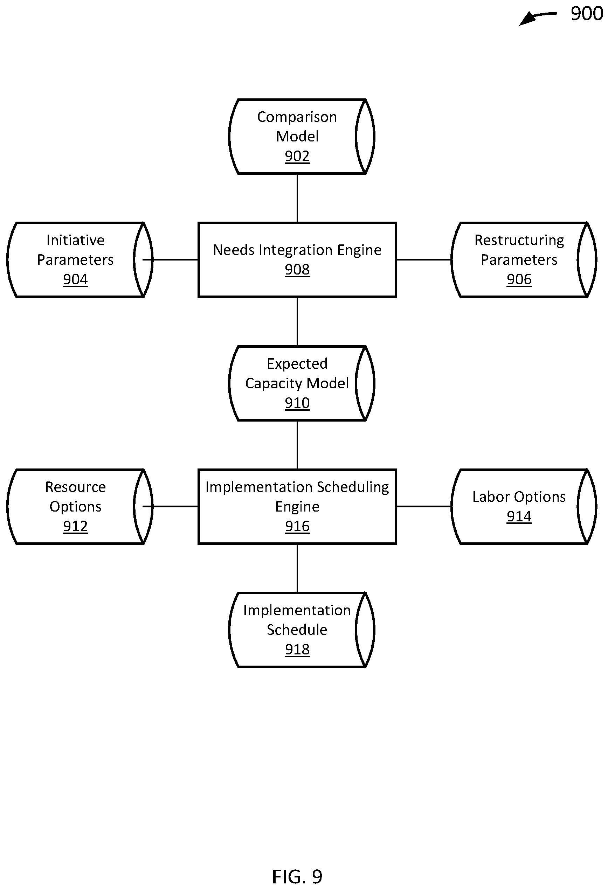

FIG. 9 depicts a diagram 900 of an example of an enterprise network needs prediction engine. The diagram 900 includes a comparison model datastore 902, an initiative parameters datastore 904, a restructuring parameters datastore 906, a needs integration engine 908, an expected capacity model datastore 910, a resource options datastore 912, a labor options datastore 914, an implementation scheduling engine 916, and an implementation schedule datastore 918 coupled to the implementation scheduling engine 916. While the description of the diagram 900 is made with respect to a single enterprise network 104, it should be understood by those ordinary skill in the art that the functions described herein with respect to FIG. 9 may be performed for each of the plurality of enterprise networks 104.

In some embodiments, the comparison model datastore 902 stores comparison models that represent components of an enterprise network and capacity allocations associated with those components with an overlay of resource utilization and similar enterprise utilizations, when applicable. In some embodiments, the comparison model is similar to the comparison model datastore 716 described with reference to FIG. 7.

In some embodiments, the initiative parameters datastore 904 may store expected capacity parameters in accordance with initiatives of the enterprise network. In some embodiments, the expected capacity parameters may include self-imposed limitations of the enterprise network, including green initiative requirements, infrastructure building, cost-cutting measures, or the like. In some embodiments, the expected enterprise allocations may be used to generate expected capacity parameters by an engine similar to the capacity computation engine 302 described with reference to FIG. 3 or the capacity computation engine 502 described with reference to FIG. 5, but for expected capacity rather than current capacity.

In some embodiments, the restructuring parameters datastore 906 may store expected changes to the enterprise network, such as remodeling, moving divisions within an existing structure, moving to a new structure, or the like. In some embodiments, when applicable, the restructuring parameters may include a new network topology, which may be used, along with the expected capacity parameters, to generate an expected capacity model that incorporates the new network topology. In some embodiments, the needs integration engine 908 may include functionality similar to the capacity modeling engine 310 described with reference to FIG. 3 or the capacity modeling engine 510 of FIG. 5, but for expected capacity rather than current capacity.

In some embodiments, the needs integration engine 908 may use the comparison model datastore 902, the initiative parameters datastore 904, and the restructuring parameters datastore 906 to generate an expected capacity model. In some embodiments, the comparison model may include a consumption model of the enterprise network and a composite model of similar real-world networks. In some embodiments, the comparison model may be a consumption model of the enterprise network, which may be compared with models that incorporate expected changes to the enterprise network. The expected capacity model may incorporate information in the initiative parameters datastore 904 regarding desired changes to various aspects of the enterprise network, which can impact capacity, and information in the restructuring parameters datastore 906 regarding organizational or structural changes, which can impact capacity at particular space-time coordinates within the enterprise network. In some embodiments, the expected capacity model datastore 910 may store the expected capacity model generated by the needs integration engine 908.

In some embodiments, the resource options datastore 912 may include data about hardware options available to the enterprise network. In some embodiments, the hardware options can include specifications for hardware that is on the market or will be available at a future date. The hardware options may or may not include hardware that is already available at the enterprise network, such as hardware that may be eliminated pursuant to changes brought on by initiatives or restructuring, or that are warehoused and not in use, any of which may be treated as now available after generating the expected capacity model.

In some embodiments, the labor options datastore 914 may include data about the time and costs associated with moving from a current model to a future model. In some embodiments, the labor options may include technicians, engineers, and other professionals who offer their services on the market. In some embodiments, the labor options may or may not include in-house talent capable of carrying out expected implementations.

In some embodiments, the implementation scheduling engine 916 may use data stored in the resource options datastore 912 and the labor options datastore 914 to generate an implementation schedule, complete with costs and time requirements, to convert a current capacity model to the expected capacity model of the expected capacity model datastore 910. In some embodiments, the implementation schedule datastore 918 may store the implementation schedule generated by the implementation scheduling engine 916.

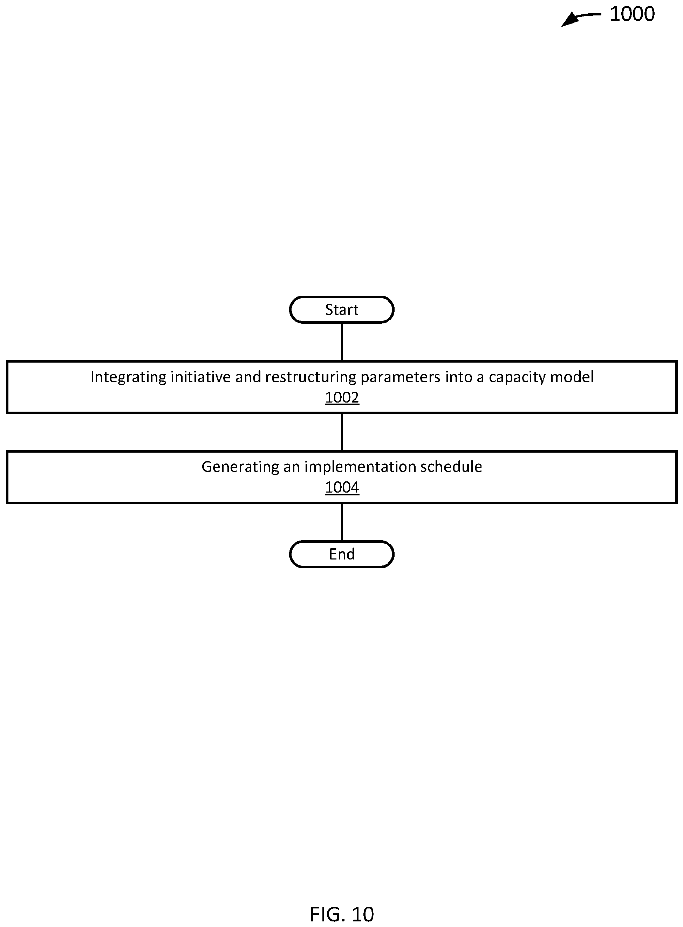

FIG. 10 depicts a method 1000 for predicting network needs. While the description of the method 1000 is made with respect to a single enterprise network 104, it should be understood by those ordinary skill in the art that the functions described herein with respect to FIG. 10 may be performed for each of the plurality of enterprise networks 104.

At 1002, the method 1000 may include integrating, using the needs integration engine 908 of FIG. 9, initiative and restructuring parameters into a capacity model. For example, a user of an enterprise network 104 can use a comparison model that includes a consumption model of the enterprise network and a composite model of similar enterprise networks for decision-making purposes.

At 1004, the method 1000 may include generating, using the implementation scheduling engine 916 of FIG. 9, an implementation schedule, which may include resource options and labor options available on the market or through other channels. In some embodiments, the user of the enterprise network 104 can use the implementation schedule to understand costs and time associated with changing a current enterprise network configuration to a new enterprise network configuration.

Various embodiments can be implemented, for example, using one or more well-known computer systems, such as computer system 1200 shown in FIG. 12. Computer system 1200 can be any well-known computer capable of performing the functions described herein, such as one or more of the operations described in Figs. 4, 6, 8, 10, and 11.

Computer system 1200 includes one or more processors (also called central processing units, or CPUs), such as a processor 1204. Processor 1204 is connected to a communication infrastructure or bus 1206. Processor 1204 may be a graphics processing unit (GPU). In some embodiments, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1200 also includes user input/output device(s) 1203, such as monitors, keyboards, pointing devices, etc., which communicate with communication infrastructure 1206 through user input/output interface(s) 1202.

Computer system 1200 also includes a main or primary memory 1208, such as random access memory (RAM). Main memory 1208 may include one or more levels of cache. Main memory 1208 has stored therein control logic (e.g., computer software) and/or data.

Computer system 1200 may also include one or more secondary storage devices or memory 1210. Secondary memory 1210 may include, for example, a hard disk drive 1212 and/or a removable storage device or drive 1214. Removable storage drive 1214 may be a floppy disk drive, a magnetic tape drive, a compact disk drive, an optical storage device, tape backup device, and/or any other storage device/drive.

Removable storage drive 1214 may interact with a removable storage unit 1218. Removable storage unit 1218 may include a computer usable or readable storage device having stored thereon computer software (control logic) and/or data. Removable storage unit 1218 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1214 may read from and/or write to removable storage unit 1218.

Secondary memory 1210 may include other means, devices, components, instrumentalities or other approaches for allowing computer programs and/or other instructions and/or data to be accessed by computer system 1200. Such means, devices, components, instrumentalities or other approaches may include, for example, a removable storage unit 1222 and an interface 1220. Examples of the removable storage unit 1222 and the interface 1220 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1200 may further include a communication or network interface 1224. Communication interface 1224 may enable computer system 1200 to communicate and interact with any combination of external devices, external networks, external entities, etc. (individually and collectively referenced by reference number 1228). For example, communication interface 1224 may allow computer system 1200 to communicate with external or remote devices 1228 over communications path 1226, which may be wired and/or wireless (or a combination thereof), and which may include any combination of LANs, WANs, the Internet, etc. Control logic and/or data may be transmitted to and from computer system 1200 via communication path 1226.

Computer system 1200 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 1200 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1200 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture including a tangible, non-transitory computer useable or readable medium having control logic (software) stored thereon may also be referred to herein as a computer program product or program storage device. This includes, but is not limited to, computer system 1200, main memory 1208, secondary memory 1210, and removable storage units 1218 and 1222, as well as tangible articles of manufacture embodying any combination of the foregoing. Such control logic, when executed by one or more data processing devices (such as computer system 1200), may cause such data processing devices to operate as described herein.

Embodiments of the present embodiments have been described above with the aid of functional building blocks illustrating the implementation of specified functions and relationships thereof. The boundaries of these functional building blocks have been arbitrarily defined herein for the convenience of the description. Alternate boundaries may be defined so long as the specified functions and relationships thereof are appropriately performed.

Based on the teachings contained in this disclosure, it will be apparent to persons skilled in the relevant art(s) how to make and use embodiments of this disclosure using data processing devices, computer systems and/or computer architectures other than that shown in FIG. 12. In particular, embodiments can operate with software, hardware, and/or operating system implementations other than those described herein.

The foregoing description of the specific embodiments will so fully reveal the general nature of the embodiments that others may, by applying knowledge within the skill of the art, readily modify and/or adapt for various applications such specific embodiments, without undue experimentation, without departing from the general concept of the present embodiments. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present embodiments should not be limited by any of the above-described exemplary embodiments, but should be defined only in accordance with the following claims.

## Claims

1. A method, comprising:
receiving (404), by a server (120) with a machine learning model (130), enterprise-specific data, the enterprise-specific data comprising a plurality of service parameters (208), traffic, and traffic analytics, wherein the plurality of service parameters (208) are associated with an enterprise network (104);
analyzing (406), by the server device (120), using the machine learning model (130), the enterprise-specific data to generate a consumption model for the enterprise network (104);
comparing (408), by the server device (120), using the machine learning model (130), the consumption model of the enterprise network (104) with a consumption model of a subset of enterprise networks (104) with a same category as the enterprise network (104);
predicting (410), by the server device (120), needs of the enterprise network (104) based on peak and off-peak periods based on individual needs of each of the subset of enterprise networks (104); and
generating (412), by the server device (120), service capacity recommendations based on at least one of the comparing or the predicting the needs.

2. The method of claim 1, wherein predicting (410) needs of the enterprise network (104) comprises:
generating a predictive consumption model for the enterprise network (104) based on a historical consumption model for the enterprise network (104); and
comparing the historical consumption model with the predictive consumption model.

3. The method of claim 1, further comprising, using the machine learning model (130), analyzing the enterprise-specific data to determine a ratio of consumed network resources to available network resources based on a set of service capacity and consumption of the enterprise network (104).

4. The method of claim 3, wherein analyzing the enterprise-specific data to generate the resource consumption model comprises identifying a plurality of patterns of at least one of availability or consumption of the network resources.

5. The method of claim 4, wherein the plurality of patterns are modeled using a modelling pipeline based on at least one of a pattern mining technique, a recursive feature elimination technique, or a gradient boosting technique.

6. The method of claim 5, wherein the pattern mining technique comprises a sequential pattern mining technique, and wherein the sequential pattern mining technique comprises at least one of a sequential pattern discovery using equivalence classes (SPADE) technique, a frequent closed sequential pattern mining technique, or a vertical mining of maximal sequential patterns (VMSP) technique.

7. The method of claim 5, wherein the modelling pipeline is further based on at least a data mining technique, and wherein the data mining technique comprises at least one of tracking patterns, a classification, an association, or a clustering.

8. A device (1200), comprising:
a memory (1208); and
a processor (1204) coupled to the memory (1208) and configured to:
receive enterprise-specific data, the enterprise-specific data comprising a plurality of service parameters (208), traffic, and traffic analytics, wherein the plurality of service parameters (208) are associated with an enterprise network (104);
analyze, using a machine learning model (130), the enterprise-specific data to generate a consumption model for the enterprise network (104);
compare, using the machine learning model (130), the consumption model of the enterprise network (104) with a consumption model of a subset of enterprise networks (104) with a same category as the enterprise network (104);
predict needs of the enterprise network (104) based on peak and off-peak periods based on individual needs of each of the subset of the enterprise networks(104); and
generate service capacity recommendations based on at least one of the comparing or the predicting the needs.

9. The device of claim 8, wherein to predict needs of the enterprise network (104), the processor (1204) is further configured to:
generate a predictive consumption model for the enterprise network (104) based on a historical consumption model for the enterprise network (104); and
compare the historical consumption model with the predictive consumption model.

10. The device of claim 8, wherein the processor is further configured to, using the machine learning model (130), analyze the plurality of service parameters (208) to determine a ratio of consumed network resources to available network resources based on a set of service capacity and consumption of the enterprise network (104).

11. The device of claim 10, wherein, to analyze the enterprise-specific data to generate the resource consumption model, the processor (1204) is further configured to identify a plurality of patterns of at least one of availability or consumption of the network resources.

12. The device of claim 11, wherein the plurality of patterns are modeled using a modelling pipeline based on at least one of a pattern mining technique, a recursive feature elimination technique, or a gradient boosting technique.

13. The device of claim 12, wherein the pattern mining technique comprises a sequential pattern mining technique, and wherein the sequential pattern mining technique comprises at least one of a sequential pattern discovery using equivalence classes (SPADE) technique, a frequent closed sequential pattern mining technique, or a vertical mining of maximal sequential patterns (VMSP) technique.

14. The device of claim 12, wherein the modelling pipeline is further based on at least a data mining technique, and wherein the data mining technique comprises at least one of tracking patterns, a classification, an association, or a clustering.

15. A non-transitory, tangible computer-readable device having instructions stored thereon that, when executed by at least one computing device, causes the at least one computing device to perform operations comprising:
receiving (404), by a server device (120) with a machine learning model (130), enterprise-specific data, the enterprise-specific data comprising a plurality of service parameters (208), traffic, and traffic analytics, wherein the plurality of service parameters (208) are associated with an enterprise network (104);
analyzing (406), using the machine learning model (130), the enterprise-specific data to generate a consumption model for the enterprise network (104);
comparing (408), using the machine learning model (130), the consumption model of the enterprise network (104) with a consumption model of a subset of enterprise networks (104) with a same category as the enterprise network (104);
predicting (410), needs of the enterprise network (104) based on peak and off-peak periods based on individual needs of each of the subset of the enterprise networks (104); and
generating (412), service capacity recommendations based on at least one of the comparing or the predicting the needs.

## Patentansprüche

1. Verfahren, das Folgendes beinhaltet:
Empfangen (404), durch einen Server (120) mit einem Machine-Learning-Modell (130), von unternehmensspezifischen Daten, wobei die unternehmensspezifischen Daten mehrere Dienstparameter (208), Datenverkehr und Datenverkehrsanalysen umfassen, wobei die mehreren Dienstparameter (208) mit einem Unternehmensnetzwerk (104) assoziiert sind;
Analysieren (406), durch das Servergerät (120) anhand des Machine-Learning-Modells (130), der unternehmensspezifischen Daten, um ein Verbrauchsmodell für das Unternehmensnetzwerk (104) zu erzeugen;
Vergleichen (408), durch das Servergerät (120) anhand des Machine-Learning-Modells (130), des Verbrauchsmodells des Unternehmensnetzwerks (104) mit einem Verbrauchsmodell eines Teilsatzes von Unternehmensnetzwerken (104) aus derselben Kategorie wie das Unternehmensnetzwerk (104);
Vorhersagen (410), durch das Servergerät (120), des Bedarfs des Unternehmensnetzwerks (104) auf der Basis von Spitzen- und Nebenzeiten auf der Basis des individuellen Bedarfs von jedem aus dem Teilsatz von Unternehmensnetzwerken (104); und
Erzeugen (412), durch das Servergerät (120), von Dienstkapazitätsempfehlungen auf der Basis des Vergleichens und/oder des Vorhersagens des Bedarfs.

2. Verfahren nach Anspruch 1, wobei das Vorhersagen (410) des Bedarfs des Unternehmensnetzwerks (104) Folgendes beinhaltet:
Erzeugen eines prädiktiven Verbrauchsmodells für das Unternehmensnetzwerk (104) auf der Basis eines historischen Verbrauchsmodells für das Unternehmensnetzwerk (104); und
Vergleichen des historischen Verbrauchsmodells mit dem prädiktiven Verbrauchsmodell.

3. Verfahren nach Anspruch 1, das ferner das Analysieren, anhand des Machine-Learning-Modells (130), der unternehmensspezifischen Daten beinhaltet, um ein Verhältnis von verbrauchten Netzwerkressourcen zu verfügbaren Netzwerkressourcen auf der Basis eines Satzes von Dienstkapazität und Verbrauch des Unternehmensnetzwerks (104) zu bestimmen.

4. Verfahren nach Anspruch 3, wobei das Analysieren der unternehmensspezifischen Daten zum Erzeugen des Ressourcenverbrauchsmodells das Identifizieren mehrerer Muster von Verfügbarkeit und/oder Verbrauch der Netzwerkressourcen beinhaltet.

5. Verfahren nach Anspruch 4, wobei die mehreren Muster anhand einer Modellierungspipeline auf der Basis von mindestens einer von einer Mustererkennungstechnik, einer rekursiven Merkmaleliminierungstechnik oder einer Gradienten-Boosting-Technik modelliert werden.

6. Verfahren nach Anspruch 5, wobei die Mustererkennungstechnik eine sequenzielle Mustererkennungstechnik umfasst, und wobei die sequenzielle Mustererkennungstechnik mindestens eine von einer SPADE-(Sequential Pattern Discovery using Equivalence Classes)-Technik, einer Technik zur Erkennung häufiger geschlossener sequenzieller Muster oder einer VMSP-(Vertical Mining of Maximal Sequential Patterns)-Technik umfasst.

7. Verfahren nach Anspruch 5, wobei die Modellierungspipeline ferner auf mindestens einer Data-Mining-Technik basiert und wobei die Data-Mining-Technik mindestens eines von Musterverfolgung, Klassifizierung, Assoziation oder Clustering umfasst.

8. Gerät (1200), das Folgendes umfasst:
einen Speicher (1208); und
einen Prozessor (1204), der mit dem Speicher (1208) gekoppelt und konfiguriert ist zum:
Empfangen unternehmensspezifischer Daten, wobei die unternehmensspezifischen Daten mehrere Dienstparameter (208), Datenverkehr und Datenverkehrsanalysen umfassen, wobei die mehreren Dienstparameter (208) mit einem Unternehmensnetzwerk (104) assoziiert sind;
Analysieren, anhand eines Machine-Learning-Modells (130), der unternehmensspezifischen Daten, um ein Verbrauchsmodell für das Unternehmensnetzwerk (104) zu erzeugen;
Vergleichen, anhand des Machine-Learning-Modells (130), des Verbrauchsmodells des Unternehmensnetzwerks (104) mit einem Verbrauchsmodell eines Teilsatzes von Unternehmensnetzwerken (104) aus derselben Kategorie wie das Unternehmensnetzwerk (104);
Vorhersagen des Bedarfs des Unternehmensnetzwerks (104) auf der Basis von Spitzen- und Nebenzeiten auf der Basis des individuellen Bedarfs von jedem aus dem Teilsatz von Unternehmensnetzwerken (104); und
Erzeugen von Dienstkapazitätsempfehlungen auf der Basis des Vergleichens und/oder des Vorhersagens des Bedarfs.

9. Gerät nach Anspruch 8, wobei zum Vorhersagen des Bedarfs des Unternehmensnetzwerks (104) der Prozessor (1204) ferner konfiguriert ist zum:
Erzeugen eines prädiktiven Verbrauchsmodells für das Unternehmensnetzwerk (104) auf der Basis eines historischen Verbrauchsmodells für das Unternehmensnetzwerk (104); und
Vergleichen des historischen Verbrauchsmodells mit dem prädiktiven Verbrauchsmodell.

10. Gerät nach Anspruch 8, wobei der Prozessor ferner konfiguriert ist zum Analysieren, anhand des Machine-Learning-Modells (130), der mehreren Dienstparameter (208), um ein Verhältnis von verbrauchten Netzwerkressourcen zu verfügbaren Netzwerkressourcen auf der Basis eines Satzes von Dienstkapazität und Verbrauch des Unternehmensnetzwerks (104) zu bestimmen.

11. Gerät nach Anspruch 10, wobei zum Analysieren der unternehmensspezifischen Daten zur Erzeugung des Ressourcenverbrauchsmodells der Prozessor (1204) ferner zum Identifizieren mehrerer Muster von Verfügbarkeit und/oder Verbrauch der Netzwerkressourcen konfiguriert ist.

12. Gerät nach Anspruch 11, wobei die mehreren Muster anhand einer Modellierungspipeline auf der Basis von mindestens einer von einer Mustererkennungstechnik, einer rekursiven Merkmaleliminierungstechnik oder einer Gradienten-Boosting-Technik modelliert werden.

13. Gerät nach Anspruch 12, wobei die Mustererkennungstechnik eine sequenzielle Mustererkennungstechnik umfasst, und wobei die sequenzielle Mustererkennungstechnik mindestens eine von einer SPADE-(Sequential Pattern Discovery using Equivalence Classes)-Technik, einer Technik zur Erkennung häufiger geschlossener sequenzieller Muster oder einer VMSP-(Vertical Mining of Maximal Sequential Patterns)-Technik umfasst.

14. Gerät nach Anspruch 12, wobei die Modellierungspipeline ferner auf mindestens einer Data-Mining-Technik basiert und wobei die Data-Mining-Technik mindestens eines von Musterverfolgung, Klassifizierung, Assoziation oder Clustering umfasst.

15. Nicht-transitorisches, greifbares, computerlesbares Gerät, auf dem Befehle gespeichert sind, die bei Ausführung durch mindestens ein Rechengerät das mindestens eine Rechengerät zum Ausführen von Operationen veranlassen, die Folgendes umfassen:
Empfangen (404), durch ein Servergerät (120) mit einem Machine-Learning-Modell (130), von unternehmensspezifischen Daten, wobei die unternehmensspezifischen Daten mehrere Dienstparameter (208), Datenverkehr und Datenverkehrsanalysen umfassen, wobei die mehreren Dienstparameter (208) mit einem Unternehmensnetzwerk (104) assoziiert sind;
Analysieren (406), anhand des Machine-Learning-Modells (130), der unternehmensspezifischen Daten, um ein Verbrauchsmodell für das Unternehmensnetzwerk (104) zu erzeugen;
Vergleichen (408), anhand des Machine-Learning-Modells (130), des Verbrauchsmodells des Unternehmensnetzwerks (104) mit einem Verbrauchsmodell eines Teilsatzes von Unternehmensnetzwerken (104) aus derselben Kategorie wie das Unternehmensnetzwerk (104);
Vorhersagen (410) des Bedarfs des Unternehmensnetzwerks (104) auf der Basis von Spitzen- und Nebenzeiten auf der Basis des individuellen Bedarfs von jedem aus dem Teilsatz von Unternehmensnetzwerken (104); und
Erzeugen (412) von Dienstkapazitätsempfehlungen auf der Basis des Vergleichens und/oder des Vorhersagens des Bedarfs.

## Revendications

1. Procédé, comprenant les étapes consistant à :
recevoir (404), par un serveur (120) doté d'un modèle d'apprentissage automatique (130), des données spécifiques à une entreprise, les données spécifiques à l'entreprise comprenant une pluralité de paramètres de service (208), du trafic et des analyses de trafic, la pluralité de paramètres de service (208) étant associés à un réseau d'entreprise (104) ;
analyser (406), par le dispositif serveur (120), au moyen du modèle d'apprentissage automatique (130), les données spécifiques à l'entreprise pour générer un modèle de consommation pour le réseau d'entreprise (104) ;
comparer (408), par le dispositif serveur (120), au moyen du modèle d'apprentissage automatique (130), le modèle de consommation du réseau d'entreprise (104) à un modèle de consommation d'un sous-ensemble de réseaux d'entreprise (104) possédant une même catégorie que le réseau d'entreprise (104) ;
prédire (410), par le dispositif serveur (120), des besoins du réseau d'entreprise (104) sur la base de périodes de pointe et de creux sur la base de besoins individuels de chaque réseau d'entreprise du sous-ensemble de réseaux d'entreprise (104) ; et
générer (412), par le dispositif serveur (120), des recommandations de capacité de service sur la base de la comparaison et/ou de la prédiction des besoins.

2. Procédé selon la revendication 1, la prédiction (410) des besoins du réseau d'entreprise (104) comprenant les étapes consistant à :
générer un modèle de consommation prédictif pour le réseau d'entreprise (104) sur la base d'un modèle de consommation historique pour le réseau d'entreprise (104) ; et
comparer le modèle de consommation historique au modèle de consommation prédictif.

3. Procédé selon la revendication 1, comprenant en outre, au moyen du modèle d'apprentissage automatique (130), l'étape consistant à analyser les données spécifiques à l'entreprise pour déterminer un rapport entre les ressources de réseau consommées et les ressources de réseau disponibles sur la base d'un ensemble capacité de service-consommation du réseau d'entreprise (104).

4. Procédé selon la revendication 3, l'analyse des données spécifiques à l'entreprise pour générer le modèle de consommation de ressources comprenant l'étape consistant à identifier une pluralité de profils de disponibilité et/ou de consommation des ressources de réseau.

5. Procédé selon la revendication 4, la pluralité de profils étant modélisés au moyen d'un pipeline de modélisation sur la base d'au moins une technique parmi une technique d'extraction de profils, une technique d'élimination récursive de caractéristiques et une technique d'amplification de gradient.

6. Procédé selon la revendication 5, la technique d'extraction de profils comprenant une technique d'extraction de profils séquentiels, et la technique d'extraction de profils séquentiels comprenant au moins une technique parmi une technique de découverte de profils séquentiels par classes d'équivalence (SPADE), une technique d'extraction de profils séquentiels clos fréquents et une technique d'extraction verticale de profils séquentiels maximaux (VMSP).

7. Procédé selon la revendication 5, le pipeline de modélisation étant en outre basé sur au moins une technique d'exploration de données, et la technique d'exploration de données comprenant au moins une action parmi un suivi de profils, une classification, une association et un partitionnement.

8. Dispositif (1200), comprenant :
une mémoire (1208) ; et
un processeur (1204), couplé à la mémoire (1208) et configuré pour :
recevoir des données spécifiques à une entreprise, les données spécifiques à l'entreprise comprenant une pluralité de paramètres de service (208), du trafic et des analyses de trafic, la pluralité de paramètres de service (208) étant associés à un réseau d'entreprise (104) ;
analyser, au moyen d'un modèle d'apprentissage automatique (130), les données spécifiques à l'entreprise pour générer un modèle de consommation pour le réseau d'entreprise (104) ;
comparer, au moyen du modèle d'apprentissage automatique (130), le modèle de consommation du réseau d'entreprise (104) à un modèle de consommation d'un sous-ensemble de réseaux d'entreprise (104) possédant une même catégorie que le réseau d'entreprise (104) ;
prédire des besoins du réseau d'entreprise (104) sur la base de périodes de pointe et de creux sur la base de besoins individuels de chaque réseau d'entreprise du sous-ensemble des réseaux d'entreprise (104) ; et
générer des recommandations de capacité de service sur la base de la comparaison et/ou de la prédiction des besoins.

9. Dispositif selon la revendication 8, pour prédire des besoins du réseau d'entreprise (104) le processeur (1204) étant en outre configuré pour :
générer un modèle de consommation prédictif pour le réseau d'entreprise (104) sur la base d'un modèle de consommation historique pour le réseau d'entreprise (104) ; et
comparer le modèle de consommation historique au modèle de consommation prédictif.

10. Dispositif selon la revendication 8, le processeur étant en outre configuré pour, au moyen du modèle d'apprentissage automatique (130), analyser la pluralité de paramètres de service (208) pour déterminer un rapport entre les ressources de réseau consommées et les ressources de réseau disponibles sur la base d'un ensemble capacité de service-consommation du réseau d'entreprise (104).

11. Dispositif selon la revendication 10, pour analyser les données spécifiques à l'entreprise pour générer le modèle de consommation de ressources le processeur (1204) étant en outre configuré pour identifier une pluralité de profils de disponibilité et/ou de consommation des ressources de réseau.

12. Dispositif selon la revendication 11, la pluralité de profils étant modélisés au moyen d'un pipeline de modélisation sur la base d'au moins une technique parmi une technique d'extraction de profils, une technique d'élimination récursive de caractéristiques et une technique d'amplification de gradient.

13. Dispositif selon la revendication 12, la technique d'extraction de profils comprenant une technique d'extraction de profils séquentiels, et la technique d'extraction de profils séquentiels comprenant au moins une technique parmi une technique de découverte de profils séquentiels par classes d'équivalence (SPADE), une technique d'extraction de profils séquentiels clos fréquents et une technique d'extraction verticale de profils séquentiels maximaux (VMSP).

14. Dispositif selon la revendication 12, le pipeline de modélisation étant en outre basé sur au moins une technique d'exploration de données, et la technique d'exploration de données comprenant au moins une action parmi un suivi de profils, une classification, une association et un partitionnement.

15. Dispositif non transitoire, tangible et lisible par ordinateur, sur lequel sont stockées des instructions qui, lorsqu'elles sont exécutées par au moins un dispositif informatique, amènent l'au moins un dispositif informatique à réaliser les opérations comprenant les étapes consistant à :
recevoir (404), par un dispositif serveur (120) doté d'un modèle d'apprentissage automatique (130), des données spécifiques à une entreprise, les données spécifiques à l'entreprise comprenant une pluralité de paramètres de service (208), du trafic et des analyses de trafic, la pluralité de paramètres de service (208) étant associés à un réseau d'entreprise (104) ;
analyser (406), au moyen du modèle d'apprentissage automatique (130), les données spécifiques à l'entreprise pour générer un modèle de consommation pour le réseau d'entreprise (104) ;
comparer (408), au moyen du modèle d'apprentissage automatique (130), le modèle de consommation du réseau d'entreprise (104) à un modèle de consommation d'un sous-ensemble de réseaux d'entreprise (104) possédant une même catégorie que le réseau d'entreprise (104) ;
prédire (410) des besoins du réseau d'entreprise (104) sur la base de périodes de pointe et de creux sur la base de besoins individuels de chaque réseau d'entreprise du sous-ensemble des réseaux d'entreprise (104) ; et
générer (412) des recommandations de capacité de service sur la base de la comparaison et/ou de la prédiction des besoins.
